# EUROPÄISCHE PATENTSCHRIFT

(11) **EP 4 425 068 B1**
(45) Veröffentlichungstag und Bekanntmachung des Hinweises auf die Patenterteilung: **02.12.2026**
(21) Anmeldenummer: 24160834.8
(22) Anmeldetag: 01.03.2024
(51) Int. Cl.: F24H 1/00, B60H 1/22, F24H 3/04, F24H 9/00, F24H 9/02, F24H 9/1818, H05B 3/06, H05B 3/78

(54) **ELEKTRISCHE HEIZVORRICHTUNG**
ELECTRIC HEATING DEVICE
DISPOSITIF DE CHAUFFAGE ÉLECTRIQUE

(30) Priorität: 03.03.2023 DE 102023105280
(43) Veröffentlichungstag der Anmeldung: 04.09.2024
(73) Patentinhaber: Eberspächer catem GmbH & Co. KG, 76863 Herxheim (DE)
(72) Erfinder: Werner, Patrick, 67141 Neuhofen (DE); Kröner, Timo, 76761 Rülzheim (DE); Wang, Jikang, 76761 Rülzheim (DE); Beck, Fabian, 76829 Landau in der Pfalz (DE)
(74) Vertreter: Grünecker Patent- und Rechtsanwälte PartG mbB

(56) Entgegenhaltungen:
- EP-A1- 2 884 198
- WO-A1-2014/000666
- KR-A- 20130 093 883
- KR-A- 20160 009 961
- KR-A- 20160 106 842
- KR-Y1- 200 349 121

## Beschreibung

Die vorliegende Erfindung betrifft eine elektrische Heizvorrichtung mit den oberbegrifflichen Merkmalen von Anspruch 1.

Eine solche elektrische Heizvorrichtung ist beispielsweise aus WO 2014/000666 bekannt.

Die EP 1 872 986 A1, EP 2 797 381 A1 bzw. EP 2 884 198 A1 offenbaren jeweils eine elektrische Heizvorrichtung mit einem mehrteiligen Gehäuse, welches eine Heizkammer zum Hindurchleiten des zu erwärmenden Mediums durch das Gehäuse und eine Anschlusskammer für den elektrischen Anschluss von zumindest einer PTC-Heizeinrichtung aufweist. Das Gehäuse hat Ein- und Auslassöffnungen für das Einleiten des zu erwärmenden Mediums in das Gehäuse bzw. Ausleiten aus dem Gehäuse. Zwischen der Zirkulationskammer und der Anschlusskammer befindet sich auch bei der erfindungsgemäßen Lösung bevorzugt eine Trennwand, von der Heizeinrichtungsgehäuse abragen, die Aufnahmetaschen ausbilden, in welche anschlussseitig PTC-Heizeinrichtungen eingebracht sind. Diese Heizeinrichtungsgehäuse ragen nach Art von Heizrippen in die Heizkammer herein, die über die Trennwand fluidisch vollkommen von der Anschlusskammer getrennt ist. Die Anschlusskammer hat üblicherweise auch eine Steuereinrichtung für die innerhalb der Anschlusskammer elektrisch angeschlossenen ggf. dort auch zu Heizkreisen gruppierten PTC-Heizeinrichtungen.

Bei einem anderen Stand der Technik gemäß EP 2 884 817 A1 werden die Heizrippen durch Steckelemente gebildet, die in Steckelementaufnahmen dichtend eingebracht sind, die in der Trennwand ausgespart sind, wobei Kontaktzungen der PTC-Heizeinrichtungen durch die Trennwand hindurch in die Anschlusskammer verlängert und überführt sind. Das Heizeinrichtungsgehäuse wird dabei einen Rahmen und durch diesen gefügte Isolierlage gebildet, die die PTC-Heizeinrichtung so umgeben, dass deren stromführenden Komponenten jedenfalls nicht mit dem zu erwärmenden Medium unmittelbar in Kontakt kommen.

Das Heizeinrichtungsgehäuse ist zu der Heizkammer hin und an seinem unteren Ende geschlossen und an seinem oberen Ende und zu der Anschlusskammer so weit offen, dass zumindest die elektrische Kontaktierung der Leiterbahnen in Anschlusskammer erfolgen kann. Dies schließt nicht aus, dass zwischen der Anschlusskammer und der durch das Heizeinrichtungsgehäuse gebildeten Aufnahme für die PTC-Heizeinrichtung eine fluidische Abdichtung vorgesehen ist. Die zuvor erwähnten Merkmale des Standes der Technik können auch erfindungswesentlich für die vorliegende Erfindung sein.

Die elektrische Heizvorrichtung nach der vorliegenden Erfindung hat - wie der Stand der Technik - zumindest ein PTC-Element, bei dem es sich um einen üblicherweise quaderförmig ausgebildeten Keramikstein handelt, der auf gegenüberliegenden Seiten zur Einleitung des Leistungsstromes mit einer Metallisierung versehen ist. Dieses PTC-Element wird über Leiterbahnen an unterschiedliche Polarität angeschlossen. Sowohl die Leiterbahnen als auch das PTC-Element sind Bestandteile der PTC-Heizeinrichtung.

Das PTC-Element ist selbstregelnd. Jedenfalls jenseits einer kritischen Temperatur, die auch als Curie-Temperatur bezeichnet wird, steigt der elektrische Widerstand des PTC-Elementes üblicherweise exponentiell mit der Temperatur an. So ist die Leistungsaufnahme des PTC-Elementes durch die tatsächliche Temperatur des PTC-Elementes beschränkt. Diese selbstregelnden Eigenschaften des PTC-Elementes verhindern zwar üblicherweise eine Überhitzung der elektrischen Heizvorrichtung, was für die vorliegend für die Erfindung insbesondere in Rede stehenden Fallgestaltungen bei der Benutzung der elektrischen Heizvorrichtung in einem Kraftfahrzeug von Bedeutung ist. Die selbstregelnden Eigenschaften bedingen aber auch eine sehr gute Wärmeleitung zwischen dem PTC-Element und dem zu erwärmendem Medium. Denn eine solch gute Wärmeleitfähigkeit stellt eine gute Abfuhr der erzeugten Wärme sicher. Somit wird das PTC-Element - im Vergleich zu einer Fallgestaltung mit schlechter Wärmeleitfähigkeit - mit geringerer Temperatur und damit mit höherem Wirkungsgrad betrieben.

Mit EP 1 872 986 A1 wird vorgeschlagen, das PTC-Element durch einen Keil in der Aufnahmetasche zu verspannen, um so jedenfalls eine innige wärmeleitende Anlage zwischen dem PTC-Element und den Innenflächen der Aufnahmetasche zu erreichen. Bei EP 2 884 817 A1 kann im Wesentlichen auf die Wandungen der Aufnahmetasche zum Hindurchleiten der Wärme verzichtet werden. Die PTC-Heizeinrichtung wird in die Trennwand gesteckt. So kann beispielsweise die Wärmeausleitung durch eine isolierende Keramiklage erfolgen, die abgedichtet in einem Rahmen der PTC-Heizeinrichtung aufgenommen ist und unmittelbar wärmeleitend gegen das PTC-Element anliegen kann; vgl. DE 10 2019 204 401 A1. Bei diesem Stand der Technik erfolgt die Einleitung des Leistungsstromes nicht wie üblich über eine Hauptseitenfläche des PTC-Elementes, die die größte räumliche Erstreckung hat, sondern über eine Stirnseite des quaderförmigen PTC-Elementes, die die beiden Hauptseitenflächen miteinander verbindet. Auch insofern ist ein sehr direkter Weg für die Wärmedurchleitung gegeben.

Die KR 200 349 121 offenbart eine elektrische Heizvorrichtung mit PTC-Elementen und ein zweiteiliges Gehäuse, das eine Heizrippe ausbildet, die in ein Fluidgehäuse einbringbar ist und mit in dem Fluidgehäuse freiliegenden Rippen versehen ist. Die KR 2016 000 9961 A offenbart einen induktiven Heizer mit einem Gehäuse mit zwei einander gegenüberliegenden Gehäuseelementen, die über einen Verteiler mit Ein- und Auslassöffnungen an das zu erwärmende Medium angeschlossen sind. Die Gehäuseelemente haben eine wärmeabgebende Oberfläche mit im Querschnitt dreieckigen Heizrippen.

Die obigen Beispiele zeigen, dass es nicht an Bemühungen gefehlt hat, die Wärmeauskopplung aus dem PTC-Element und Einleitung in das zu erwärmende Medium zu optimieren. Gleichwohl sieht die vorliegende Erfindung noch Raum für Verbesserung.

Die vorliegende Erfindung will eine elektrische Heizvorrichtung der eingangs genannten Art angeben, die eine sehr gute Wirksamkeit hat.

Zur Lösung dieses Problems wird mit der vorliegenden Erfindung eine elektrische Heizvorrichtung mit den Merkmalen von Anspruch 1 vorgeschlagen.

Nach der vorliegenden Erfindung hat das Heizeinrichtungsgehäuse an seiner in der Heizkammer freiliegenden Außenseite Längsrippen. Diese Längsrippen erstrecken sich entlang derjenigen Richtung, die das untere Ende des Heizeinrichtungsgehäuses mit dem oberen Ende verbindet. Die Längsrippen erstrecken sich danach quer zur Hauptströmungsrichtung des Mediums durch die Heizkammer, wobei die Hauptströmung oben durch die Trennwand und unten durch einen Boden des Gehäuses und quer dazu von zwei Heizeinrichtungsgehäusen oder einem Heizeinrichtungsgehäuse und einer Seitenwand des Gehäuses begrenzt wird. Die Längsrippen erstrecken sich im Wesentlichen rechtwinklig zu der Haupterstreckungsrichtung der Trennwand, die die Anschlusskammer von der Heizkammer trennt. Die entsprechende Richtung wird im Folgenden auch als Höhenrichtung bezeichnet werden. Die andere Haupterstreckungsrichtung der Heizeinrichtungsgehäuse wird im Folgenden als Längsrichtung bezeichnet. Diese Längsrichtung erstreckt sich üblicherweise parallel zu der Trennwand, definiert aber eine Haupterstreckungsrichtung der sich als Heizrippen von der Trennwand in die Heizkammer erstreckenden Heizeinrichtungsgehäuse. Die dritte Richtung in einem kartesischen Koordinatensystem sei die Dickenrichtung der Heizrippe. In dieser Dickenrichtung liegen die einzelnen Lagen der PTC-Heizeinrichtung, nämlich das PTC-Element und die beidseitig daran anliegenden Leiterbahnen, üblicherweise in Form von Kontaktblechen, hintereinander. Zu den Lagen gehören üblicherweise auch Isolierlagen. An jeder Außenseite einer Leiterbahn ist üblicherweise zumindest eine Isolierlage vorgesehen, so dass ein unmittelbarer elektrischer Kontakt der Leiterbahnen mit der Innenfläche des Heizeinrichtungsgehäuses unterbleibt. Zusätzlich kann innerhalb des Heizeinrichtungsgehäuses noch ein Keilelement oder ein anderes Bauteil vorgesehen sein, welches insbesondere für die Fallgestaltung, bei der das Heizeinrichtungsgehäuse durch eine einteilig mit der Trennwand gebildete Heizrippe aus Metall gebildet wird. In diesem Fall hat die Heizrippe eine fest vorgegebene Geometrie, und es ist für eine gute Wärmeauskopplung der von dem PTC-Element erzeugten Wärme förderlich, dieses mit einer gewissen Vorspannung zwischen den sich einander gegenüberliegenden Innenseiten des Heizeinrichtungsgehäuses zu verspannen. Dies erfolgt mit dem oder den weiteren, üblicherweise metallischen Bauteilen in Form eines Keils oder eine U-förmigen Aufnahme. Ein solches Bauteil schützt auch beispielsweise eine keramische Platte, die als Isolierlage vorgesehen sein kann, vor übermäßiger mechanischer Beanspruchung insbesondere beim Einbringen der PTC-Heizeinrichtung in das Heizeinrichtungsgehäuse.

Nach der erfindungsgemäßen Lösung sind üblicherweise eine Vielzahl von Längsrippen auf der Außenseite des Heizeinrichtungsgehäuses vorgesehen. Die Längsrippen erstrecken sich üblicherweise parallel zueinander. Regelmäßig sind die Längsrippen in identischer Form und in einer die Längen- und die Dickenrichtung enthaltenden Schnittansicht als gleichmäßiges Rippenmuster an der oder den Außenseiten des Heizeinrichtungsgehäuses vorgesehen. Die Längsrippen erstrecken sich üblicherweise über die gesamte Höhe und/oder die gesamte Länge derjenigen Außenfläche des Heizeinrichtungsgehäuses, die innerhalb der Heizkammer ein Strömungskanal begrenz. So strömt das zu erwärmende Medium quer zu den Längsrippen an den Außenflächen des Heizeinrichtungsgehäuses vorbei. Die Längsrippen stören die Ausbildung einer laminaren Grenzschicht und erhöhen damit den Wärmeübergangskoeffizienten an der Außenseite des Heizeinrichtungsgehäuses.

Da die Heizeinrichtungsgehäuse üblicherweise an beiden Hauptseitenflächen Strömungskanäle begrenzen, sind entsprechende Längsrippen bevorzugt an einander gegenüberliegenden Außenflächen des Heizeinrichtungsgehäuses vorgesehen. Bei diesen Außenflächen handelt es sich üblicherweise um die Hauptseitenflächen des Heizeinrichtungsgehäuses, welche wesentlich größer als die flächige Erstreckung in Dickenrichtung entweder an den Seitenrändern des Heizeinrichtungsgehäuses oder an dem unterseitig verschlossenen Boden desselben ist.

Wird die Außenseite des Heizeinrichtungsgehäuse durch eine Keramikplatte gebildet, wie dies in EP 3 416 456 A1 offenbart ist, können die Längsrippen beispielsweise beim Sintern des Keramikmaterials ausgebildet werden.

Praktische Versuche der Anmelderin haben ergeben, dass durch die Anordnung identisch ausgestalteter Rippen ein verbesserter Wärmeaustrag an der Außenfläche des Heizeinrichtungsgehäuses erreicht werden kann. So sind erfindungsgemäß mehrere parallel zueinander angeordnete Längsrippen jeweils mit identischer Querschnittsgeometrie vorgesehen. Diese Querschnittsgeometrie ist eine dreieckige Grundform. Die Neigung der an- bzw. abfallenden Flanken dieser dreieckigen Grundform sollte so gewählt werden, dass zwar einerseits eine gewisse Verwirbelung an der Grenzfläche zu dem Heizeinrichtungsgehäuse bewirkt wird, andererseits aber kein allzu großer Strömungswiderstand erzeugt wird, der die Durchströmung der Heizkammer erschwert. So steigen die Flanken der dreieckigen Grundform relativ zu der Haupterstreckungsrichtung der Außenseite des Heizeinrichtungsgehäuses mit einem Winkel von bevorzugt 35 bis 55, bevorzugt 40 bis 50 Grad an. Das in der Heizkammer freiliegende freie Ende der dreieckigen Grundform ist üblicherweise abgerundet, und zwar mit einem vorbestimmten Rippenradius.

Zwischen benachbarten Längsrippen ist erfindungsgemäß ein Plateauabschnitt vorgesehen. Dessen Erstreckung stimmt üblicherweise mit der Haupterstreckungsrichtung des Heizeinrichtungsgehäuses in Längsrichtung überein. Der Plateauabschnitt ist üblicherweise plan. Es hat sich gezeigt, dass aufgrund der Verwirbelung der Strömung durch die Rippe sich auch eine gewisse Verwirbelung in einem darauffolgenden Flächenabschnitt der Außenseite des Heizeinrichtungsgehäuses auch dann ergibt, wenn dieses vollkommen eben ist und sich parallel zur Hauptströmungsrichtung des Mediums durch die Heizkammer erstreckt.

Erfindungsgemäß ist zwischen benachbarten Längsrippen eine konkave Mulde vorgesehen. Diese konkave Mulde ragt in das Material des Heizeinrichtungsgehäuses nach innen hinein. Die Mulde kann ein- oder beidseitig von dem Plateauabschnitt umgeben sein, d.h. innerhalb des Plateauabschnitts oder angrenzend an das Ende des Plateauabschnitts ausgebildet sein.

In einer Querschnittdarstellung des Heizeinrichtungsgehäuses in Längs- und Dickenrichtung ist die durch die Längsrippen und/oder die Plateauabschnitte und/oder die konkaven Mulden ausgebildete Konturierung bevorzugt periodisch vorgesehen. Wie nach Art eines Rapports folgen dementsprechend die Längsrippen und/oder Plateauabschnitte und/oder die Mulden in einem wiederkehrenden Muster in Hauptströmungsrichtung.

Bevorzugt ist das Heizeinrichtungsgehäuse in einer quer zur Längenrichtung verlaufenden Querschnittsansicht zu seinem unteren Ende hin verjüngend ausgebildet. Dies erleichtert die Entformbarkeit des Heizeinrichtungsgehäuses insbesondere dann, wenn eine bevorzugte Weiterbildung verwirklicht ist, bei welcher das Heizeinrichtungsgehäuse zusammen mit den Längsrippen und der Trennwand durch ein einheitliches Gussteil ausgebildet wird, welches zumindest teilweise die Anschlusskammer umgibt. Dieses metallische Gussteil schirmt die elektronischen Komponenten der Steuereinrichtung innerhalb der Anschlusskammer ab. Üblicherweise wird die Anschlusskammer von diesem Gussteil und einem metallischen Deckel, der beispielsweise durch ein einfaches Blech gebildet sein kann, gebildet und verschlossen. Es versteht sich, dass ein oder mehrere Steckergehäuse an dem Anschlussgehäuse vorgesehen sein können, um den Leistungsstrom und/oder Steuersignale bis zu der Steuereinrichtung im Inneren der Anschlusskammer heranzuführen.

In die Heizkammer kann eine Kühlrippe hineinragen, die wärmeleitend mit einem beispielsweise in der Anschlusskammer oder einem separatem Steuergehäuse vorgesehenen Leistungsschalter gekoppelt ist, um diesen zu kühlen und dessen Verlustleitung an das Medium abzugeben. Eine solche Kühlrippe kann durch das die Anschlusskammer umgebende Gehäuseteil gebildet sein. Eine solche Kühlrippe kann auch eine von der Trennwand abragen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1:: eine perspektivische Seitenansicht eines Ausführungsbeispiels einer elektrischen Heizvorrichtung mit der Heizkammer nach oben;
- Figur 2:: eine perspektivische Ansicht des Ausführungsbeispiels nach Figur 1 mit der Heizkammer nach unten;
- Figur 3: eine Querschnittsansicht des Gehäuseoberteils des Ausführungsbeispiels nach den Figuren 1 und 2;
- Figur 4: eine perspektivische heizkammerseitige Draufsicht des Gehäuseoberteils des Ausführungsbeispiels nach den Figuren 1 und 2;
- Figur 5: eine bodenseitige Draufsicht auf ein erstes Ausführungsbeispiel des Heizeinrichtungsgehäuses;
- Figur 6: eine vergrößerte Darstellung der Oberflächengestaltung des Ausführungsbeispiels nach Figur 5;
- Figur 7: eine bodenseitige Draufsicht auf ein zweites Ausführungsbeispiel des Heizeinrichtungsgehäuses und
- Figur 8: eine vergrößerte Darstellung der Oberflächengestaltung des Ausführungsbeispiels nach Figur 7.

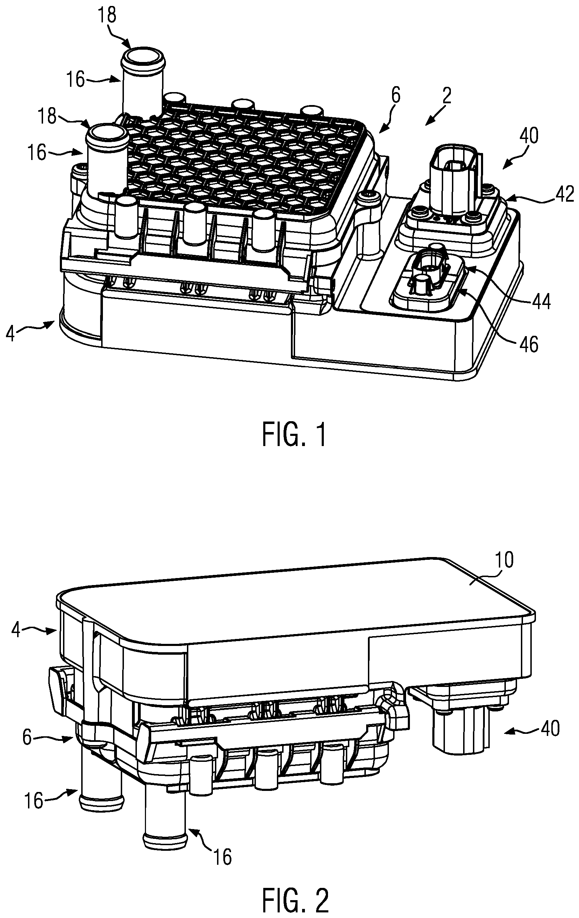

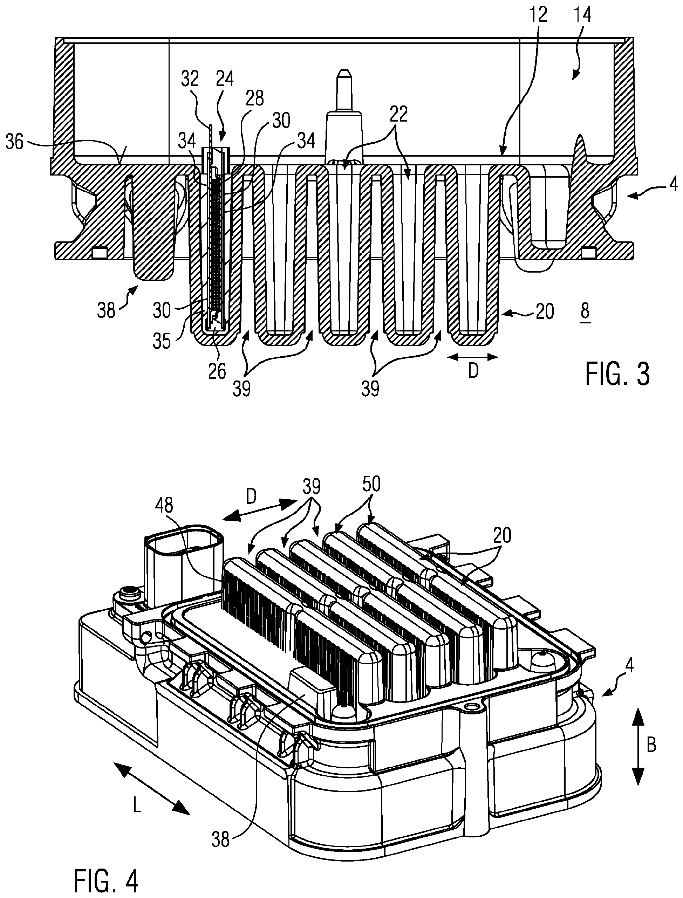

Die Figuren 1 bis 3 zeigen eine Heizvorrichtung mit einem insgesamt mit Bezugszeichen 2 gekennzeichneten Gehäuse. Das Gehäuse 2 hat ein Gehäuseoberteil 4 aus Metall, ein Gehäuseunterteil 6 aus Kunststoff, welches dicht zur Ausformung einer Heizkammer 8 mit dem Gehäuseoberteil 4 verbunden ist und einen Gehäusedeckel 10, der fluiddicht mit dem Gehäuseoberteil 4 verbunden ist. Die Heizkammer 8 ist in Figur 3 mit Bezugszeichen 8 gekennzeichnet, wenngleich das Gehäuseunterteil 6 dort nicht dargestellt ist. Zwischen dem Gehäusedeckel 10 und einer mit Bezugszeichen 12 gekennzeichneten Trennwand bildet das Gehäuseoberteil 4 eine Anschlusskammer 14 aus. Die Trennwand 12 trennt die Anschlusskammer 14 vom der Heizkammer 8 ab.

Das Gehäuseunterteil 6 bildet einen einteilig daran angeformte Einlass- und Auslassstutzen 16 aus. An diese Stutzen 16 bilden Ein- bzw. Auslassöffnungen 18 zu der Heizammer 8. An diese Stutzen 16 können Schläuche zum Führen des zu erwärmenden flüssigen Mediums angeschlossen werden.

Die Stutzen 16 münden in die Heizkammer 8. In diese Heizkammer 8 ragen Heizeinrichtungsgehäuse 20 hinein, die durch Druckguss einteilig an der Trennwand 12 und damit dem Gehäuseoberteil 4 ausgebildet sind. Vorliegend sind zwei Heizeinrichtungsgehäuse 20 unmittelbar nebeneinander und über einen Einzug 21 ineinander übergehend ausgebildet. Jedes Heizeinrichtungsgehäuse 20 bildet eine in Figur 3 mit Bezugszeichen 22 gekennzeichnete Aufnahmetasche aus, die zu der Heizkammer 8 hin geschlossen und zu der Anschlusskammer 14 hin offen ist. Wie Figur 3 belegt ist in jeder Aufnahmetasche 22 vorliegend zumindest eine ggf. auch mehrere PTC-Heizeinrichtungen 24 vorgesehen. Jede PTC-Heizeinrichtung 24 hat einen Rahmen 26, der ein PTC-Element 28 in sich aufnimmt und zwei Leiterbahnen in Form von Kontaktblechen 30 zu einer Einheit fügt, die unmittelbar elektrisch leitend an Hauptseitenflächen des PTC-Elementes 28 anliegen und bis in die Anschlusskammer 14 hineinragende Kontaktzungen 32 ausbilden. Die Kontaktbleche 30 sind außenseitig mit einer Isolierlage 34, beispielsweise einer Aluminiumoxidplatte bzw. einer elektrisch isolierenden Folie, versehen. Dadurch werden die Kontaktbleche 30 isolierend in der Aufnahmetasche 22 abgestützt. Ein gut wärmeleitender Kontakt der Hauptseitenflächen des PTC-Elementes 28 kann beispielsweise durch Verkeilen des PTC-Elementes 28 zusammen mit den Kontaktblechen und den Isolierlagen 34 in der Aufnahmetasche 22 durch ein U-förmiges Element 35 erfolgen; vergleiche DE 10 2020 201 571 A1.

In Figur 3 ist seitlich neben den Aufnahmetaschen 22 eine Kühlfläche 36 erkennbar, die durch die Trennwand 12 ausgebildet ist und gegen welche Leistungsschalter einer nicht dargestellten Steuereinrichtung 38 wärmeleitend angelegt sind. Der Kühlfläche 36 ist zumindest eine einteilig an der Trennwand vorgesehene Kühlrippe 38 zugeordnet. Zwischen benachbarten Heizeinrichtungsgehäusen 20 bzw. zwischen einem Heizeinrichtungsgehäuse 20 und der Kühlrippe 38 werden mit Bezugszeichen 39 gekennzeichnete Strömungskanäle ausgebildet.

Die Figuren 1 und 2 lassen einen Leistungsstecker 40 mit einem Leistungssteckergehäuse 42 und einen Steuerstecker 44 mit einem Steuersteckergehäuse 46 erkennen. Über diese Schnittstellen wird der Leistungsstrom bzw. werden die Steuersignale der in der Anschlusskammer vorgesehenen Steuereinrichtung zugeleitet.

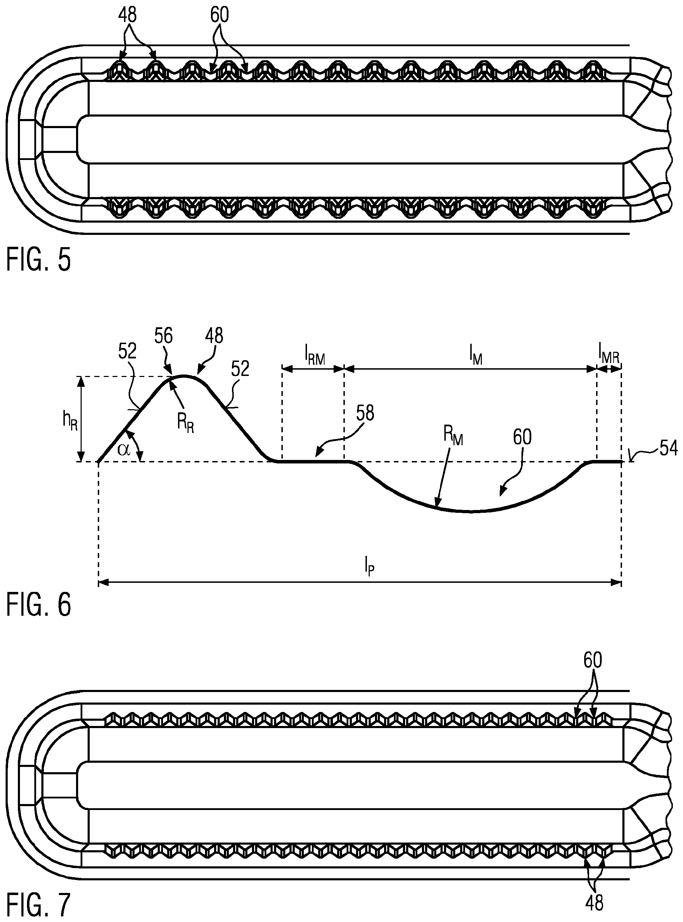

Die Figuren 4 und 6 zeigen makroskopisch eine bodenseitige Draufsicht auf die Heizeinrichtungsgehäuse 20 des Ausführungsbeispiels. Die Länge L und die Dicke D sind eingezeichnet in Übereinstimmung mit Figur 4. Die Länge L und die Höhe H gemäß Figur 4 definiert die Haupterstreckungsrichtung des Heizeinrichtungsgehäuses 20. Die in dieser Ebene sich erstreckende Außenseite des Heizeinrichtungsgehäuses 20 weist eine Vielzahl von Längsrippen 48 auf, die in gleichmäßigen Abständen in Richtung der Länge L hintereinander vorgesehen sind. Diese Längsrippen 48 erstrecken sich ausschließlich in Richtung der Höhe H. Sie sind über die gesamte Länge L des Heizeinrichtungsgehäuses 20 verteilt vorgesehen und erstrecken sich auch über die gesamte Höhe ausgehend von einem Boden 50 des Heizeinrichtungsgehäuses 20 bis zu dem Anschluss an die Trennwand 12. Wie bereits die Figur 4 vermittelt, haben die jeweiligen Längsrippen 48 identische Querschnittsgeometrie. Details dieser Querschnittsgeometrie sind in Figur 5 dargestellt.

Auch die Kühlrippen 38 sind mit Längsrippen 48 versehen.

Figur 5 zeigt eine Länge I einer periodischen Struktur, die sich über die Länge L der Außenseite des Heizeinrichtungsgehäuses 20 wiederholt. Von links nach rechts ist zunächst die Längsrippe 48 dargestellt. Diese hat eine im Querschnitt im Wesentlichen dreieckige Grundform. Die jeweiligen Flankenflächen 52 gehen mit einem Winkel α von 45 Grad +/- 5 bis 10 Grad, bevorzugt etwa 45 Grad von einer Bezugsfläche 54 entsprechend der Haupterstreckungsrichtung des Heizeinrichtungsgehäuses 20 ab. Ein in der Heizkammer 8 freiliegendes freies Ende 56 der dreieckigen Grundform ist mit einem Rippenradius R_{R} abgerundet. Der Rippenradius R_{R} liegt bei 0,3 mm +/- 0,1 bis 0,2 mm bevorzugt etwa 0,3 mm.

An diese Längsrippe 48 schließt sich rechts davon in Figur 5 ein Plateauabschnitt 58 an. Dieser verläuft parallel zu der Bezugsfläche 54. Der Plateauabschnitt 58 wird vorliegend durchbrochen von einer konkaven Mulde 60.

Bei dem Ausführungsbeispiel beträgt die Länge der periodischen Struktur L zwischen 1 und 100mm, bevorzugt zwischen 2 und 6 mm. Die Mulde 60 hat eine Länge I_{M} zwischen 0,01 und 10 mm, bevorzugt zwischen 0,5 und 2 mm. Der Abstand I_{RM} zwischen der Längsrippe 48 und dem linken Rand der Mulde liegt zwischen 0,01 und 5 mm, bevorzugt zwischen 0,1 und 0,3 mm. Der Abstand I_{MR} zwischen dem rechten Rand der Mulde 60 und der Längsrippe 48 der nächsten Struktur in der Periode liegt bei zwischen 0,01 und 5 mm, bevorzugt zwischen 0,1 und 0,3 mm. Der Radius R_{M} der Mulde 60 liegt bei zwischen 0,5 und 1 mm bevorzugt zwischen 0,7 und 0,9 mm.

Die Höhe h_{R} der Längsrippe 48 liegt zwischen 0,1 und 10 mm bevorzugt zwischen 0,3 und 0,8 mm. Der Übergang zwischen der Längsrippe 48 und dem Plateauabschnitt ist vor und hinter der Längsrippe 48 durch einen Radius angeglichen.

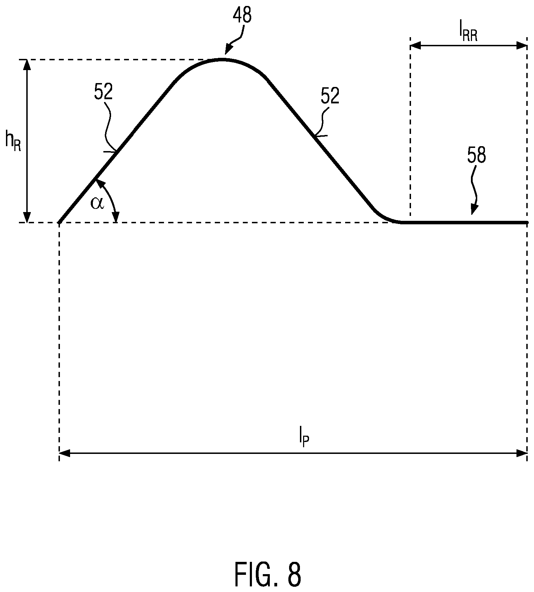

Das Ausführungsbeispiel nach den Figuren 7 und 8 folgt einer anderen Systematik. Dort ist lediglich eine einzige Längsrippe 48 vorgesehen. Die jeweiligen Flankenflächen 52 erheben sich mit einem Winkel α von 33 Grad +/- 5 bis 10 Grad, bevorzugt etwa 33 Grad von den benachbarten Plateauabschnitten 58 entsprechend in die Haupterstreckungsrichtung des Heizeinrichtungsgehäuses 20. Die Plateauabschnitte haben eine Länge I_{RR} entsprechend dem Abstand zwischen benachbarten Längsrippen 48 von zwischen 0 und 100 mm bevorzugt zwischen 0 und 4 mm. Die Länge Iₚ der Struktur nach Figur 8 liegt bei zwischen 0,1 und 100 mm bevorzugt zwischen 0,5 und 2,5 mm.

### Bezugszeichenliste

- 2: Gehäuse
- 4: Gehäuseoberteil
- 6: Gehäuseunterteil
- 8: Heizkammer
- 10: Gehäusedeckel
- 12: Trennwand
- 14: Anschlusskammer
- 16: Ein- und Auslassstutzen
- 18: Ein- und Auslassöffnungen
- 20: Heizeinrichtungsgehäuse
- 21: Einzug
- 22: Aufnahmetasche
- 24: PTC-Heizeinrichtung
- 26: Rahmen
- 28: PTC-Element
- 30: Kontaktblech
- 32: Kontaktzungen
- 34: Isolierlage
- 35: U-förmiges Element
- 36: Kühlfläche
- 38: Kühlrippe
- 39: Strömungskanal
- 40: Leistungsstecker
- 42: Leistungssteckergehäuse
- 44: Steuerstecker
- 46: Steuersteckergehäuse
- 48: Längsrippe
- 50: Boden
- 52: Flänkenfläche
- 54: Bezugsfläche
- 56: freies Ende
- 58: Plateauabschnitt
- 60: Mulde
- L: Länge des Heizeinrichtungsgehäuses
- B: Breite des Heizeinrichtungsgehäuses
- D: Dicke des Heizeinrichtungsgehäuse
- I_{RM}: Abstand Längsrippe - Mulde
- I_{MR}: Abstand Mulde - nächste Längsrippe
- I_{M}: Länge Mulde
- I_{RR}: Abstand Längsrippe - nächste Längsrippe
- Iₚ: Länge periodische Struktur
- h_{R}: Höhe Längsrippel□
- R_{M}: Radius Mulde
- R_{R}: Rippenradius
- α: Winkel

## Patentansprüche

1. Elektrische Heizvorrichtung mit einem Gehäuse (2) mit Ein- und Auslassöffnungen (18) für ein zu erwärmendes Medium, das eine Heizkammer (8) für das Hindurchleiten des zu erwärmenden Mediums durch das Gehäuse (2) und eine Anschlusskammer (14) für den elektrischen Anschluss von zumindest einer PTC-Heizeinrichtung (24) aufweist, wobei die PTC-Heizeinrichtung (24) zumindest ein PTC-Element (28) und zur Bestromung des PTC-Elements (28) mit unterschiedlicher Polarität elektrisch leitend mit dem PTC-Element (28) verbundene Leiterbahnen (30) aufweist und wobei die PTC-Heizeinrichtung (24) in ein Heizeinrichtungsgehäuse (20) eingebracht ist, das an seinem oberen Ende und zu der Anschlusskammer (14) offen und seinem unteren Ende und zu der Heizkammer (8) geschlossen ist und von der Trennwand (12) in Richtung auf die Heizkammer (8) abragt, wobei das Heizeinrichtungsgehäuse (20) an seiner in der Heizkammer (8) freiliegenden Außenseite Längsrippen (48) aufweist, die sich entlang der Richtung erstrecken, die das untere Ende des Heizeinrichtungsgehäuses (20) mit seinem oberen Ende verbindet, **dadurch gekennzeichnet, dass** mehrere parallel zueinander angeordnete Längsrippen (48) jeweils eine identische Querschnittsgeometrie in Form mit einer im wesentlichen dreieckigen Grundform haben und dass zwischen benachbarten Längsrippen (48) ein Plateauabschnitt (58) und eine konkave Mulde (60) vorgesehen ist.

2. Elektrische Heizvorrichtung nach Anspruch 1, **dadurch gekennzeichnet, dass** die Längsrippen sich über die gesamte Höhe (H) und/oder die gesamte Länge (L) einer einen Strömungskanal (39) in der Heizkammer (14) seitlich begrenzenden Außenfläche des Heizeinrichtungsgehäuses (20) erstrecken.

3. Elektrische Heizvorrichtung nach Anspruch 1 oder 2, **dadurch gekennzeichnet, dass** sich einander gegenüberliegende und jeweils einen Strömungskanal (39) in der Heizkammer (8) seitlich begrenzende Außenflächen des Heizeinrichtungsgehäuses (20) jeweils Längsrippen (48) aufweisen.

4. Elektrische Heizvorrichtung nach zumindest einem der vorherigen Ansprüche, **dadurch gekennzeichnet, dass** das in der Heizkammer (8) freiliegende freie Ende (56) der dreieckigen Grundform mit einem Rippenradius R_{R} von 0,01 bis 10 mm bevorzugt mit einem Rippenradius R_{R} von 0,3 mm +/- 0,1 bis 0,2 mm abgerundet ist.

5. Elektrische Heizvorrichtung nach zumindest einem der vorherigen Ansprüche, **dadurch gekennzeichnet, dass** das Heizeinrichtungsgehäuse (20) sich in einer quer zur Längenrichtung verlaufenden Querschnittsansicht zum seinem unteren Ende verjüngend ausgebildet ist.

6. Elektrische Heizvorrichtung nach zumindest einem der vorherigen Ansprüche, **dadurch gekennzeichnet, dass** das Heizeinrichtungsgehäuse (20) zusammen mit den Längsrippen (48) und die Trennwand (12) durch ein die Anschlusskammer (14) zumindest teilweise umgebendes einheitliches Gussteil ausgebildet sind.

## Claims

1. An electric heating device comprising a housing (2) with inlet and outlet openings (18) for a medium to be heated, said housing having a heating chamber (8) for passing the medium to be heated through the housing (2) and a connection chamber (14) for the electrical connection of at least one PTC heating unit (24), wherein the PTC heating unit (24) has at least one PTC element (28) and conductive tracks (30) electrically conductively connected to the PTC element (28) for supplying the PTC element (28) with electric current of different polarity, and wherein the PTC heating unit (24) is introduced into a heating-unit housing (20) which is open at its upper end and towards the connection chamber (14) and closed at its lower end and towards the heating chamber (8) and projects from the partition wall (12) towards the heating chamber (8), wherein the heating-unit housing (20) has longitudinal ribs (48) on its outer side exposed in the heating chamber (8), which extend along the direction connecting the lower end of the heating-unit housing (20) to its upper end, **characterised in that** a plurality of longitudinal ribs (48) arranged parallel to one another each have an identical cross-sectional geometry in a form with a substantially triangular basic shape and **in that** a plateau portion (58) and a concave depression (60) are provided between adjacent longitudinal ribs (48).

2. The electric heating device according to claim 1, **characterised in that** the longitudinal ribs extend over the entire height (H) and/or the entire length (L) of an outer surface of the heating-unit housing (20) laterally delimiting a flow channel (39) in the heating chamber (14).

3. The electric heating device according to claim 1 or 2, **characterised in that** mutually opposite outer surfaces of the heating-unit housing (20), each laterally delimiting a flow channel (39) in the heating chamber (8), each have longitudinal ribs (48).

4. The electric heating device according to at least one of the preceding claims, **characterised in that** the exposed free end (56) of the triangular basic shape in the heating chamber (8) is rounded with a rib radius R_{R} of 0.01 to 10 mm, preferably with a rib radius R_{R} of 0.3 mm +/- 0.1 to 0.2 mm.

5. The electric heating device according to at least one of the preceding claims, **characterised in that** the heating-unit housing (20) is formed to taper towards its lower end in a cross-sectional view extending transversely to the longitudinal direction.

6. The electric heating device according to at least one of the preceding claims, **characterised in that** the heating-unit housing (20) together with the longitudinal ribs (48) and the partition wall (12) are formed by a one-piece casting at least partially surrounding the connection chamber (14).

## Revendications

1. Dispositif de chauffage électrique comprenant un boîtier (2) avec des ouvertures d'entrée et de sortie (18) pour un fluide à chauffer, ledit boîtier comportant une chambre de chauffage (8) permettant de faire passer le fluide à chauffer à travers le boîtier (2) et une chambre de raccordement (14) pour le raccordement électrique d'au moins une unité de chauffage PTC (24), dans lequel l'unité de chauffage PTC (24) comporte au moins un élément PTC (28) et des pistes conductrices (30) reliées de manière électriquement conductrice à l'élément PTC (28) pour alimenter l'élément PTC (28) en courant électrique de polarités différentes, et dans lequel l'unité de chauffage PTC (24) est introduite dans un boîtier de l'unité de chauffage (20) qui est ouvert à son extrémité supérieure et du côté de la chambre de raccordement (14) et fermé à son extrémité inférieure et du côté de la chambre de chauffage (8) et fait saillie depuis la cloison de séparation (12) en direction de la chambre de chauffage (8), dans lequel le boîtier de l'unité de chauffage (20) comporte, sur sa face extérieure exposée dans la chambre de chauffage (8), des nervures longitudinales (48) qui s'étendent le long de la direction reliant l'extrémité inférieure du boîtier de l'unité de chauffage (20) à son extrémité supérieure, **caractérisé en ce que** plusieurs nervures longitudinales (48) disposées parallèlement les unes aux autres présentent chacune une géométrie de section transversale identique sous une forme ayant une forme de base sensiblement triangulaire et **en ce qu'**une portion en plateau (58) et une dépression concave (60) sont prévues entre des nervures longitudinales (48) adjacentes.

2. Dispositif de chauffage électrique selon la revendication 1, **caractérisé en ce que** les nervures longitudinales s'étendent sur toute la hauteur (H) et/ou toute la longueur (L) d'une surface extérieure du boîtier de l'unité de chauffage (20) délimitant latéralement un canal d'écoulement (39) dans la chambre de chauffage (14).

3. Dispositif de chauffage électrique selon la revendication 1 ou 2, **caractérisé en ce que** des surfaces extérieures du boîtier de l'unité de chauffage (20), opposées l'une à l'autre et délimitant chacune latéralement un canal d'écoulement (39) dans la chambre de chauffage (8), comportent chacune des nervures longitudinales (48).

4. Dispositif de chauffage électrique selon au moins l'une des revendications précédentes, **caractérisé en ce que** l'extrémité libre exposée (56) de la forme de base triangulaire dans la chambre de chauffage (8) est arrondie avec un rayon de nervure R_{R} de 0,01 à 10 mm, de préférence avec un rayon de nervure R_{R} de 0,3 mm +/- 0,1 à 0,2 mm.

5. Dispositif de chauffage électrique selon au moins l'une des revendications précédentes, **caractérisé en ce que** le boîtier de l'unité de chauffage (20) est réalisé de manière à se rétrécir vers son extrémité inférieure dans une vue en coupe transversale s'étendant transversalement à la direction longitudinale.

6. Dispositif de chauffage électrique selon au moins l'une des revendications précédentes, **caractérisé en ce que** le boîtier de l'unité de chauffage (20) conjointement avec les nervures longitudinales (48) et la cloison de séparation (12) sont formés par une pièce moulée monobloc entourant au moins partiellement la chambre de raccordement (14).
